# EUROPEAN PATENT APPLICATION

(11) **EP 1 521 439 A1**
(43) Date of publication of application: **06.04.2005**
(21) Application number: 04104786.1
(22) Date of filing: 30.09.2004
(51) Int. Cl.: H04M 3/22, H04M 7/00

(54) **Integrated personal call management system**

(30) Priority: 01.10.2003 US 507903 P
(71) Applicant: AT&T Corp., New York, NY 10013-2412 (US)
(72) Inventor: Hanson, Karrie J., Westfield, NJ 07090 (US); Karam, Gerald, Morristown, NJ 07960 (US); Henderson, Donnie, Manalapan, NJ 07726 (US); Smith, Thomas, Westfield, NJ 07090 (US); Purdy, Kermit Hal, Bernardsville, NJ 07924 (US)
(74) Representative: Asquith, Julian Peter

(57) **Abstract**

The present invention provides system and a method for managing calls from at least one calling party to at least one called party. The method includes intercepting an incoming call from the calling party designated to arrive at the called party's telephone when it is busy or does not answer. Information received from the caller, such as a message, is processed according to profile instructions provisioned by the called party. The profile instructions include instructions regarding storing the call information, sending the call information to a specified address, or a combination thereof. Preferably, the call information includes a call log within which is embedded one or more interfaces to: an audio file representation of a message from a caller, a click-to-dial service, a telephone directory service, or a personal address book of the called party.

## Description

### BACKGROUND OF THE INVENTION

### 1. Cross Reference to Related Applications

This Application claims priority to U.S. Provisional Patent Application No. 60/507,903 filed on October 1, 2003, which is herein incorporated by reference in its entirety.

### 2. Field Of The Invention

The present invention relates to telephony services and, more particularly, to enhanced telephony services for call management.

### 3. Acronyms

The written description provided herein contains acronyms which refer to various telecommunication services, components and techniques, as well as features related to the present invention. For purposes of the written description herein, the acronyms are defined as follows:
Access Director Server (ADS)
Common Backbone Network (CBB)
Digital Subscriber Line (DSL)
Directory Number (DN)
Dual Tone Multi-Frequency (DTMF)
Ethernet Switches (ES)
High Speed Data Network (HSD)
Independent Local Exchange Companies (ILEC)
Integrated Network Management System (INMS)
Integrated Services Digital Network (ISDN)
Interactive Products and Service (IPS)
Interactive Voice Response (IVR)
Internet Protocol (IP)
Local Network Services (LNS)
Multimedia Gateway Control (MGCP)
North American Numbering Plan (NANP)
Numbering Plan Area (NPA)
Primary Rate Interface (PRI)
Public Switch Telephone Network (PSTN)
Real-Time Transfer Protocol (RTP)
Service Group (SG)
Service Provisioning System (SPS)
Session Initiation Protocol (SIP)
Sonus Data System Integrator (DSI)
Terminal Adaptor (TA)
Time Division Multiplex (TDM)
Voice Over Internet Protocol (VoIP)

### 4. Background Information

Presently, subscribers to call control services within the public switch telephone network (PSTN) are able to activate and modify their services by calling a customer service representative or by interaction with an interactive voice response (IVR) system using a standard dual tone multi-frequency (DTMF) telephone device. However, these methods limit the number and type of services that can be provided to and modified by the subscribers because information related to the services is presented audibly. Furthermore, there is a reluctance on the part of the subscriber to use IVR systems.

Attempts have been made to incorporate the use of packet switched data networks, such as the Internet, to avoid conventional IVR systems and to streamline the process by which services can be activated and modified. For example, it is known for a subscriber to telephone services to use an internet portal to gain access to their subscription to examine the status of calls/service features and to initiate and/or modify a service through the portal.

Packet networks are general-purpose data networks that are designed to transmit bits. Such networks are well suited for sending stored data of various types, including messages, fax, speech, audio, video and still images.

Call management systems are known which are integrated with the PSTN and a packet network. One key feature of these systems is the ability to broker among communication options between a called party's preferences for being contacted or communicated with by others and on the other hand, the calling party's preference to establish communications contact with and/or send a message to the called party.

There is currently a need in the art for methods for efficient call management, wherein calls to a called party are intercepted when the called party's telephone is busy or does not answer. It would be advantageous to receive call information from a caller during the intercepted call and to process the call information in accordance with profile information associated with the called party, which could be set-up by the called party through an internet portal. The profile information would desirably include instructions regarding whether the call information should be stored on a server or sent to the called party as an email attachment, for example. Even more desirable would be a method wherein the call information includes a call log within which is embedded one or more interfaces to: an audio file representation of a message from a caller, a click-to-dial telephone service, a telephone directory service, or a personal address book of the called party.

### SUMMARY OF THE INVENTION

The present invention provides a method for managing calls from at least one calling party to at least one called party. The method includes receiving an incoming call from the calling party designated to arrive at an end device of the called party, and retrieving profile information associated with the called party when the called party's end device is busy or does not answer. The method also includes processing call information received from the calling party based on the profile information. The profile information includes instructions regarding storing the call information, sending the call information to an address specified by the called party, or combinations thereof

A system is also disclosed for implementing the method of the present invention which takes advantage of packet-switched telephony across a high-speed data network. The system of the present invention manages calls from at least one calling party to at least one called party. The system includes an internet protocol network connected to an end device of the called party. The system also includes at least one gateway for receiving an incoming call from the calling party designated to arrive at the called party's end device. Further included in the inventive system is at least one platform connected to the gateway for handling the incoming call received from the gateway when the called party's end device is busy or does not answer after a user-configurable timeout. The handling includes retrieving profile information associated with the called party; and processing call information from the calling party based on the profile information. The profile information includes instructions regarding storing the call information (for example, on a server), sending the call information to an address specified by the called party, or combinations thereof.

The called party is a VoIP subscriber who can configure the call management service to provide a notification, such as an email or page, when an email arrives and can provide the message itself as an attachment to the email. When the called party retrieves the message from the server, the messaging service can be advantageously integrated with other services.
The telephone numbers presented in the message list, for example, can be utilized to present an interface to a "Click-to-Dial" service or can be utilized in a telephone directory service to lookup additional information about the individual/entity at that number.

It is also advantageous for the call management system to maintain a call log of all calls that a VoIP subscriber places or receives. The call log can include a timestamp, the VoIP subscriber's name, and the calling and called telephone numbers. Messages received in the context of a missed call can be embedded in the call log with links to an audio file representation of the message.

A provisioning mechanism is also disclosed which permits a called party to self-provision the integrated personal call management service feature. As used herein, the term provisioning means addition, modification or control of service features. The provisioning mechanism permits a called party to designate where and how the message should be stored and different notification mechanisms. A recording mechanism is disclosed which permits a called party to record a personalized greeting using a combination of a data service and a packet-switched telephony device.

### BRIEF DESCRIPTION OF THE DRAWINGS

FIG. 1 is a schematic representation of an embodiment of a system of the present invention.

FIG. 2 is a schematic showing of components in one embodiment of a system of the present invention.

FIG. 3 is an illustrative listing of signaling interfaces between components in one embodiment of a system of the present invention.

FIG. 4 sets forth an example of signaling flow representing call setup signaling for a call from a calling party to a called party accessible on the PSTN network.

FIG. 5 sets forth an example of signaling flow representing call setup signaling for a call from a PSTN end user, i.e. called party, to a calling party.

FIG. 6 is a flow diagram illustrating the processing performed by the subscriber provisioning the call management according to an embodiment of the present invention.

FIG. 7 is a flow diagram illustrating the processing performed by the subscriber who has provisioned the call management according to an embodiment of the present invention.

### DETAILED DESCRIPTION OF THE INVENTION

### Service Architecture

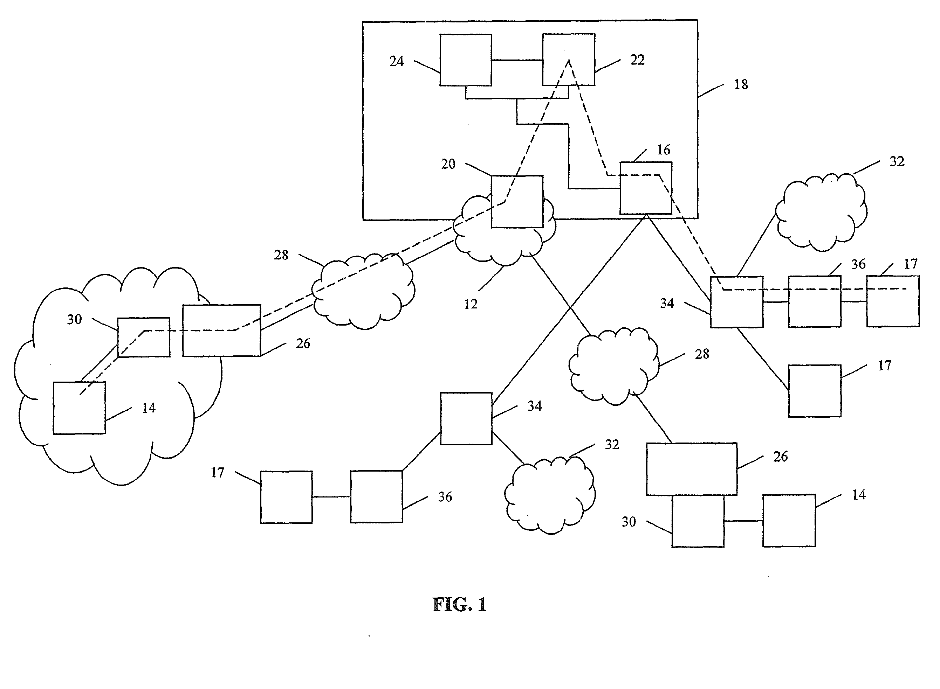

Referring now to the drawings, FIG. 1 shows an embodiment of a system 10 according to the present invention, which is suitable for implementation of the call management method of the present invention. System 10 includes an internet protocol network 12 connected to an end device 14 of a called party. System 10 further includes at least one gateway 16 for receiving an incoming call from a device 17 of a calling party designated to arrive at end device 14 of the called party. The system also includes a platform 18, which is a VoIP platform connected to gateway 16 for handling the incoming call received from the gateway when the called party's end device 14 is busy or does not answer after a user-configurable timeout. The handling of the incoming call from device 17 includes retrieving profile information associated with the called party; and processing call information, such as a message, from the calling party based on the profile information. The profile information includes instructions regarding storing the call information, sending the call information to an address specified by called party, and combinations thereof. Platform 18 is connected to network 12 desirably through a fast router 20. Platform 18 can include of a variety of servers. In a preferred embodiment, platform 18 includes at least one application server 22, within which resides the service logic necessary to implement the call management method of the present invention. Application Server 22 has voice over internet capabilities. Routing and policy information can optionally be stored in additional servers, such as policy server 34.

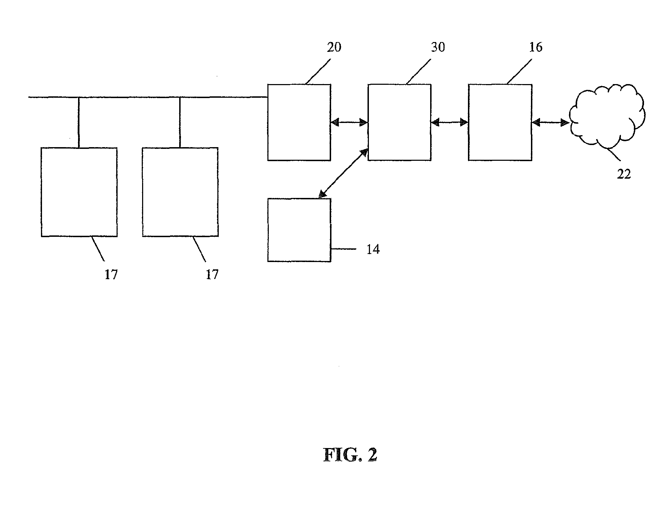

A called party is assumed to have access through some form of access device 26 to a high speed data (HSD) network 28. For example, the called party is assumed to have a broadband connection to a broadband access network, provided through a cable or digital subscriber line (DSL) modem. It is preferable that the subscriber have at least 128 Kbps upstream bandwidth. The called party connects their telephone via an RJ-11 jack (not shown) preferably into a terminal adaptor 30 (TA). The TA connects to the called party's cable or DSL modem. The use of the TA can ensure that the called party's data packets do not degrade the voice quality-of-service. FIG. 2 is a more detailed view of how the TA may be adapted for connection to a modem and a home network. Alternatively, and without limitation, end device 14 itself can be a modified integrated access device that connects directly to the modem or the broadband network. Alternatively, and without limitation, the telephone can be a telephony client executed on a data access device, such as a personal computer. It is assumed that the called party also has access through the same access device or a separate access device to data services, such as a Web browser.

The high speed data network 28 provides access to the service provider's internet protocol network 28, such as AT&T's Internet Protocol (IP) Common Backbone Network (CBB). The backbone network is used for call setup signaling and network management. The backbone network is also used to carry the RTP stream to the telephony gateway.

The illustrative VoIP platform 18 is depicted in FIG. 1 and is connected to network 12 illustratively through a fast router 20. The platform can be illustratively composed of a variety of servers connected via a high speed local area network using Ethernet switches (ES) and/or routers to provide access/networking to network 12. The platform has a network gateway border element 18 to a legacy telephone network, e.g. to a long distance network 32 in the Public Switch Telephone Network (PSTN). For example, as shown in FIG. 1, a SONUS GSX 9000 Gateway 16 is shown which is an IP/PSTN gateway that supports SIP-to-PRI signaling and RTP-to-TDM media stream between the IP network and the PSTN. The local network services (LNS) switch 34 shown in FIG. 1 can advantageously support what is known in the art as AT&T PrimePlex Service. Calls from the PSTN to VoIP service subscribers (such as the called party referred to herein) are routed over the PSTN to the LNS switch and terminated over the PRI facility from the LNS switch to the gateway. The gateway uses National ISDN-2 PRI signaling to set up the call to the LNS End Office. The LNS End Office sets up the call to the switched network (4ESS) or other Independent local Exchange Carrier (ILEC) 36 switch using SS7 signaling. The LNS end office also receives calls from the PSTN and directs them to the appropriate PRI facility from the LNS end office to the gateway.

Features of the present invention are implemented in application server(s) 22 in the VoIP platform 18. The service logic necessary to implement the features resides in the application servers while routing and policy information is stored in additional servers that support the capabilities of the application servers.

For example, in one embodiment, the platform 18 shown in FIG. 1 has a number of application servers which can support conventional Class 5 and CLASS features in conjunction with the terminal adaptor 30. The TA receives a dial plan from the at least one application server 22 and notifies the application server 22 when specific digits or signals are received from end device 14 of the called party (who is a VoIP subscriber). For example, the TA notifies the application server 22 when a VoIP service subscriber goes "off-hook" or dials a 10-digit number. Server 22 also directs TA 30 to play specific tones, for example, busy, ringing, and dial tone. The application server 22 can serve as a combination MGCP border element and Class 5 feature application server. Services can be subscribed at either the Directory Number (DN) or Service Group (SG) level. A Service Group is a set of Support for collecting keypad presses and phone set hook actions is provided by the terminal adaptor and its implementation of MGCP. Similarly, to control the generation of tones, the application server 22 can use MGCP to communicate with the terminal adaptor 30. The policy servers 24 are illustratively Sonus PSX 6000 servers which provide routing and policy information to the application server(s) 22 and the gateway 16. The policy server 24 also supports the blocking capabilities used by the application server 22. The application server 22 can query the policy server 24 to determine message routing. The policy server 24 can act much like a Call Control Element, determining if and when the call should be routed to a gateway 16 to access the PSTN. The policy server 24 also determines that the application server 22 should process the call. The application server 22 caches profile information associated with the called party, wherein the profile information includes instructions regarding storing call information received from a caller (such as a message), sending the call information to an address specified by the called party (such as an email address), and combinations thereof. The server 22 also caches VoIP subscriber data used for providing conventional features such as Caller ID, Call Waiting, Call Forwarding, and 3-Way Calling. Persistent VoIP subscriber and feature data can be stored in an Access Directory Server (ADS) and pushed into the application server cache. Once the final call destination is determined (via a query to the policy server), the application server can use MGCP signaling to a TA (for an on-net termination) or SIP signaling to the gateway (for an off-net termination). A record keeping server can also be provided, such as a Sonus Data Stream Integrator (DSI) (not shown), which is capable of capturing call detail records from the other network elements and transforming them into billing system input format, e.g. AMA records.

In accordance with an embodiment of an aspect of the invention, a number of advanced application servers 22, (which are alternatively referred to herein as "VPLUS" servers) are provided which provide the service logic for the advanced features of the VoIP platform. For example, the advanced application servers can be Sun Fire 280R servers with custom service feature software. It is preferable to build the service logic in composable software modules called "feature boxes." See U.S. Patent No. 6,160,883 and 6,404,878, entitled "TELECOMMUNICATIONS NETWORK SYSTEM AND METHOD," which are incorporated by reference herein. These feature boxes are invoked for calls involving VoIP subscribers on the core advanced application server whenever a call is placed by or to them. Features can be subscribed to at the DN level. However, it is also advantageous to allow features to be subscribed to by "address patterns." Address Patterns allow the bulk subscription of features to a set of addresses. See co-pending, commonly assigned United States Utility Patent Application Serial No. 09/644,128, entitled "ROUTING EXTENSIONS FOR TELECOMMUNICATIONS NETWORK SYSTEM AND METHOD," filed on August 23, 2000, the contents of which are incorporated by reference herein. When the features require other resources to perform their service logic, they can invoke capabilities on other parts of the platform: such as a media server and a media bridge. The media server, for example, can be a server that supports VoiceXML and can be used whenever IVR like interaction is required with the VoIP subscriber. That is, whenever voice announcements are to be played or touchtone digits are to be collected, the VoiceXML media server capabilities can be requested by one or more feature boxes in the application server. As part of the invocation of the VoiceXML server, the feature boxes indicate where the appropriate scripts are to be found to direct the specific interaction with the user. Similarly, whenever audio needs to be bridged between more than two parties, the feature boxes involved will reroute the audio media to the media bridge so that the media can be mixed and redistributed to the parties involved. See co-pending, commonly assigned United States Utility Patent Application Serial No. 09/716,102, entitled "SIGNALING/MEDIA SEPARATION FOR TELECOMMUNICATIONS NETWORK SYSTEM, filed on November 17,2000, the contents of which are incorporated by reference herein.

In accordance with an embodiment of another aspect of the invention, the features offered by the advanced application server are desirably invoked or controlled by means of touchtone key presses on the keypad of a phone. These key presses normally generate DTMF tones. For any call where advanced services are available to VoIP subscribers, the advanced application server can monitor for touchtones from the VoIP subscriber. The advanced application server never need modify in any way the touchtone digits that it detects. That is, it does not need to remove them from the media stream; it can merely recognize them in the media stream. So, for example, if a VoIP subscriber presses a wake up sequence, for example, '***' on the keypad, any and all other people on the telephone call at that time will also hear the DTMF tones associated with '***'. When the VoIP subscriber is interacting with the Phone Feature Manager (as described further herein) or the mid-call IVR dialog, the VoIP subscriber is interacting directly with the advanced application server and all other parties on any active calls are on placed on hold. The parties on hold hear nothing of the interaction of the VoIP subscriber with the IVR dialog. That is, they do not hear touchtones entered by the VoIP subscriber nor do they hear any advanced application server announcements.

VoIP subscriber information (including profile information provisioned by the called party regarding whether to store and/or send call information to the called party to a specified address) can reside in a relational database controlled by software on the core server. Feature boxes can query and change subscriber data using an interface to a software component of the core server. It is advantageous to permit VoIP subscribers to individually enable and disable some features using several methods. For the advanced services, VoIP subscribers can enable some of them and disable some of them using either an interactive voice dialog with the Phone Feature Manager or by accessing the trial website and filling out forms there.

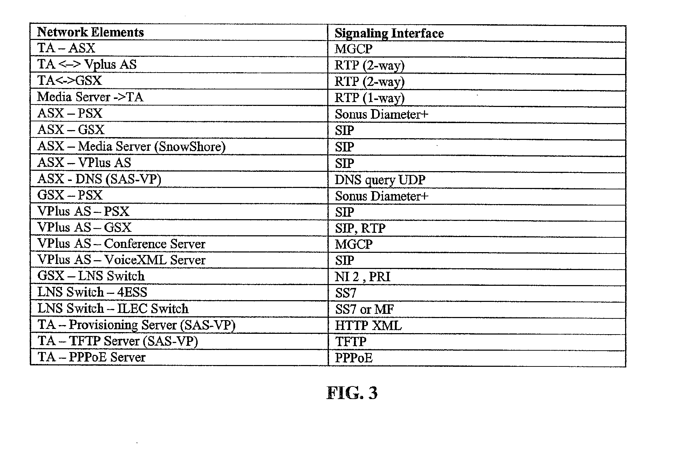

FIG. 3 sets forth an illustrative list of signaling interfaces between the components of the service architecture. The embodiment of the present invention herein is described with particular reference to the Internet Protocol (IP) and IP-based protocols such as the Session Initiation Protocol (SIP) and the Real Time Protocol (RTP). It should be noted although that the present invention is not so limited and may be readily extended by one of ordinary skill in the art to different packet-switched protocol schemes.

### Provisioning

The VoIP subscriber (e.g., the called party) is assigned a new 10-digit NANP number. The number assigned to the VoIP subscriber is provisioned in the PSTN at the time the PrimePlex telephony service is provisioned from the LNS switch to the gateway. The number is active in the PSTN at that time and will route to the policy and application servers. If the TN has not yet been assigned to a particular VoIP subscriber, (e.g., the called party), the calling parties will hear an announcement that the TN is not a working number. The Phone Feature Manager (also used by Voice Mail) and Personal Conferencing will each have one TN assigned per NPA. These two numbers per NPA will be provided to all users with VoIP TNs within that NPA. The VoIP subscriber's existing IP address associated with their broadband service is the IP address associated with the VoIP subscriber. In addition, the VoIP subscriber can be assigned a Fully Qualified Domain Name (FQDN) using any advantageous format, e.g. such as TNnpanxxxxxx.service.att.com. For calls from the VoIP subscriber TN, all calls can be dialed as 1+NPA-NXX-XXXX. The gateway (as instructed by the policy server) will signal the appropriate dialing plan for the originating PRI facility and the called party number combination to the LNS switch.

In accordance with another aspect of the invention, it is preferable to provide the VoIP subscribers with mechanisms for self-provisioning service features. For example and without limitation, subscribers can be provided with a website portal in conjunction with the advanced application server. It is advantageous to provide a web server to provide a customer website where subscribers go to accomplish three broad sets of tasks: (1) Signing up for service and retrieving account information; (2) Provisioning of advanced services; and (3) Invocation of advanced services. It is also advantageous to provide an HTTP proxy in front of the web server, primarily to provide failover capability in the event that the primary web server fails. The proxy server is the place where HTTP requests first arrive from the subscribers' web browsers. The server then proxies these HTTP requests to the currently active web server.

Alternatively or as a supplemental mechanism to the website portal, a phone feature manager can be provided. The Phone Feature Manager provides VoIP subscribers a telephone number to dial to control their services (as an alternative to the VoIP Web Portal). By calling the Phone Feature Manager, a VoIP subscriber can provision advanced services, retrieve voicemail, return calls to callers who left voicemail, and for whom a return calling number is available, change outgoing message for voicemail, activate/de-activate different services/features, call a speed dial number, call an arbitrary (non-international) number, etc. The Phone Feature Manager can be reached by dialing a speed dial code (e.g., 2-8-8-0-#) from the VoIP device, or by calling one of a service specified set of 10-digit numbers from any phone. The VoIP subscriber can configure auto-login capability for calls placed to the Phone Feature Manager from specified telephone numbers. The options for each telephone number are, for example: (a) Login with VoIP subscriber number and PIN from this telephone number (for TNs unknown to the service); (b) Login with PIN only from this telephone number; or (c) Auto-login from this telephone number (where neither VoIP TN nor PIN is required). For the purposes of announcements and the pre-population of some auto-login numbers, some VoIP subscriber information is gathered from the VoIP subscriber data provided at time of service sign up. There need be no limits imposed on the number of users who can access the Phone Feature Manager using the same VoIP subscriber TN. No login steps are required for calls to the Phone Feature Manager from the phone connected to the VoIP device. When a VoIP subscriber places calls through the Phone Feature Manager, all of the activated VoIP subscriber features can be made active, and the caller ID presented can be the VoIP subscriber's number, regardless of which device was used to access the Phone Feature Manager.

### Call Flow

The TA opens a signaling path with the control logic located in the VoIP platform. The control logic provides the IP address of the destination to the TA and the TA establishes a media path to the endpoint. For calls to other VoIP subscribers, this media path may be to a VoIP subscriber on the same broadband network or a VoIP subscriber on another broadband network. In the latter case, if the two broadband networks use different broadband providers that peer with each other, the traffic will not traverse the backbone network. In the unlikely case where the two providers do not peer with each other but do peer with the backbone network, then the traffic will traverse the backbone network. The connection between the backbone network and the VoIP platform should accommodate all signaling traffic and all single-point off-net media traffic. Where additional enhanced features are provided by the advanced application server(s), it is advantageous for all media to route through the VoIP platform, including calls to both PSTN users and VoIP subscribers. Calls to VoIP subscribers should account for the media stream to the advanced application servers and the media stream from the advanced application servers.

The following flow describes an illustrative call from a VoIP subscriber to a number served by the PSTN.

1) The TA is assumed to have registered with the Class 5 Application Server (ASX) and obtained an IP address. The application server instructs the TA to notify the application server should the PSTN end user go off hook.

2) The end user goes off hook, the application server is notified and instructs the TA to play dial tone.

3) The end user dials a 1+10-digit number. This is independent of whether this is a local or LD call.

4) The TA sends the dialed digits to the application server.

5) The application server processes the digits, querying the policy server to determine that the call is permissible and that it is an off-net call. The policy server provides the appropriate PSTN gateway to the application server.

6) The application server sends a call setup message to the gateway requesting call setup. A two-way RTP stream between the TA and the gateway is established.

7) The gateway queries the policy server to determine the route for the call. Upon receiving the policy server response, the gateway sends a call setup request over the PRI facility to the LNS switch. The setup request includes the end user's TN.

8) The LNS switch uses the rate center associated with the PRI facility and the called party number to route the call to the PSTN. The end user's TN is included in subsequent call setup signaling as the Calling Party Number.

9) When the PSTN switch applies ringing to the called party, the terminating switch plays ringing in the backward direction to the calling party.

10) When the called party answers a two-way bearer path is established and the stable call proceeds.

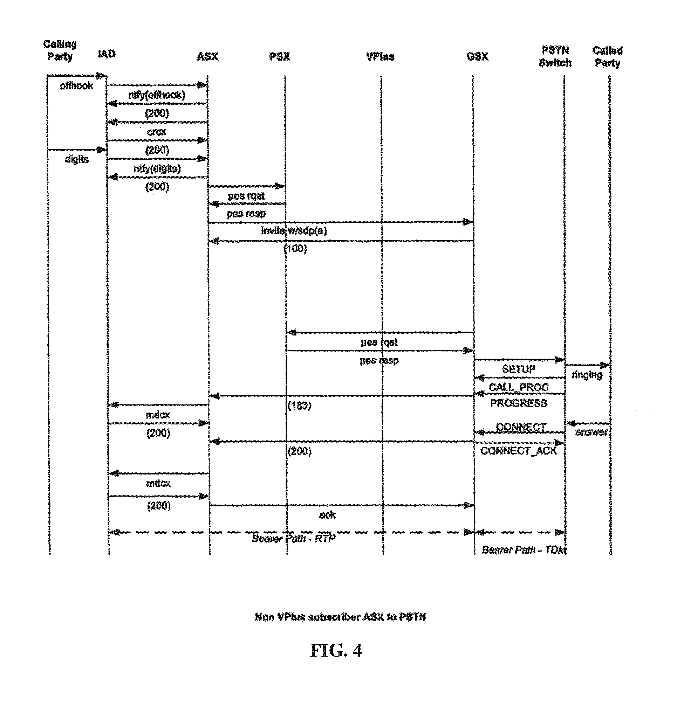

FIG. 4 sets forth an example signaling flow representing call setup signaling for a call from a VoIP subscriber to an end user accessible on the PSTN network.

The following flow describes an illustrative call from a PSTN user to a VoIP subscriber, where the two parties are in the same rate center. This example includes Caller ID.

1) The Calling Party may dial a 7- or 10-digit number, depending on the local dialing plan.

2) The ILEC switch determines that the call is permitted and routes the call to the LNS switch.

3) The LNS switch determines that the number is part of PrimePlex service terminating on the gateway. The LNS switch sends a call setup request over the PRI to the gateway.

4) The gateway queries the policy server to determine the route for the call and the policy server responds that the call should be routed to the application server.

5) The gateway sends a call setup message to the application server.

6) The application server queries the policy server to determine the route for the call and the policy server responds that the call should be routed by the application server.

7) The application server determines that the call receives Caller ID and sends a call setup request and the Caller ID to the TA.

8) The TA rings the telephone and provides the Caller ID to the caller ID equipment.

9) The VoIP subscriber answers and the bearer path is established.

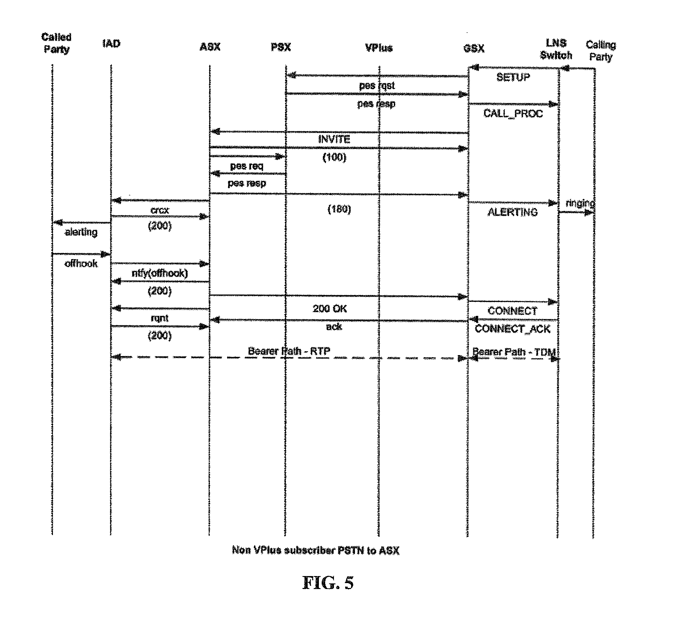

FIG. 5 sets forth an example signaling flow representing call setup signaling for a call from a PSTN end user to a VoIP subscriber.

### Call Management System

In accordance with an embodiment of an aspect of the invention, an integrated personal call management system is provided. The call management system provides call answering capability in the event that the called party's end device or devices are busy or do not answer after a user-configurable timeout (typically specified in ring cycles). The called party is a VoIP subscriber. The VoIP subscriber advantageously can utilize the VoIP end-user website to configure the service. It is advantageous to allow the VoIP subscriber to choose from a variety of outgoing message: for example, a pre-recorded system greeting, a pre-recorded system greeting with text-to-speech rendering of the VoIP subscriber's name, or a personalized message recorded by the VoIP subscriber. The VoIP subscriber can also specify general disposition for all incoming voice mail messages. The VoIP subscriber can choose to have the messages stored on a messaging server, sent as an email attachment to one of his or her own email addresses, or both. In addition, the VoIP subscriber can specify an email address to alert when a voice mail message has been received. When a VoIP subscriber uses the VoIP website to view his or her voice mail, s/he can choose to send a particular piece of voice mail to a specified list of email addresses. These email addresses can contain any email address, not necessarily one of the VoIP subscriber's own email addresses. For example, this would be useful when a VoIP subscriber wants to forward one particular voice mail message to friends. The call management system can activate/deactivate the Message Waiting Indicator stutter dial tone and play stutter dial tone to the subscriber when they pick up the handset. They are notified that they have new voice mail messages through the use of stutter dialtone heard on the VoIP endpoint when they pick up the VoIP device handset. After VoIP subscribers listen to their new voice mail, stutter dialtone is no longer heard. Messages stored on the server can be retrieved, saved and deleted via touchtone or website access.

It is advantageous for the call management system to maintain a call log of all calls that a VoIP subscriber places or receives. The call log can include the following information: a timestamp, the VoIP subscriber's name, and the calling and called TNs. An icon can be provided in the call log for each phone number that can link to a telephone directory service or to the VoIP subscriber's personal address book to retrieve more information about the number. Another icon can be provided to access each voicemail message directly from the call log. Also, the phone numbers displayed on the website can be presented as "Click-to-Dial" links. When a VoIP subscriber clicks on such a link, indicating a certain telephone number, a call is placed to the VoIP subscriber's VoIP device. When the device is answered, the desired party is also called, just as if the call had been placed by pressing digits on the VoIP phone. If the VoIP device is not answered within a timeout period, e.g. 10 seconds, the attempt is aborted. See co-pending Utility Patent Application Serial No. 09/348,819, entitled "SYSTEM AND METHOD FOR PROVIDING TELEPHONIC CONNECTION SERVICES USING A DATA NETWORK," filed on March 19, 1997, the contents of which are incorporated by reference herein.

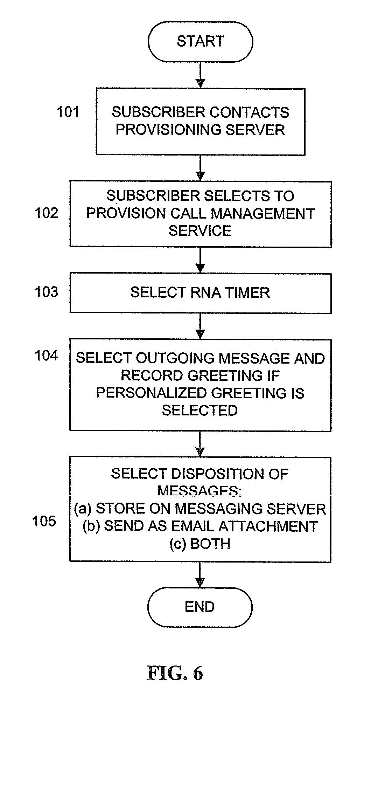

FIG. 6 illustrates the processing performed by the VoIP platform as a subscriber (e.g., the called party) provisions the call management service, in accordance with a preferred embodiment of this aspect of the invention. At step 101, the VoIP subscriber starts the provisioning process by either using a web browser to access the VoIP web portal or by using the phone to access the Phone Feature Manager. Then, at step 102, the VoIP subscriber selects to provision the call management service. At step 103, the VoIP subscriber is configures a timeout value for the messaging service, typically specified in "ring cycles". The VoIP subscriber is permitted to set the Ring with No Answer (RNA) timer, with a default value of 4 rings at the VoIP TN, for example. The VoIP platform can utilize this value to calculate a timer value in seconds based on standard ring cycles, e.g., one cycle in approximately every six seconds. Thus, where the VoIP subscriber chooses to have the messaging service pick up after "three rings", then the call management service feature can arrange to activate after 18 seconds of alerting with no answer. At step 104, the VoIP subscriber selects an outgoing message type, for example, one of the following outgoing message types: (1) Pre-recorded system greeting; (2) System greeting with TTS (Text to Speech) of VoIP subscriber name (taken for example from provisioned name field); (3) Personalized message recorded by the VoIP Subscriber. The outgoing message can be the same or different for all callers and for both busy and RNA. If a personalized message is selected, the VoIP subscriber can proceed to record the greeting.

This can advantageously be accomplished using a "Click to Record" feature, in accordance with an embodiment of another aspect of the invention. The VoIP subscriber clicks a relevant button on the website which causes the VoIP device to ring. If the VoIP device is busy or rings with no answer, nothing is recorded. If the VoIP subscriber answers, a feature-specific prompt is played and the VoIP subscriber records a message. It is advantageous to permit the VoIP subscriber to review and/or change the message.

With reference again to FIG. 6, the VoIP subscriber then is permitted the select the disposition of messages received at the messaging service. For example, the VoIP subscriber could select one of the following dispositions of messages: (a) Store on a server; (b) Send as an email attachment; (c) Both of the above. If email attachment or "Both" is selected, the VoIP subscriber provides the email address or the email address is retrieved from the VoIP subscriber's profile information. Also, it is advantageous to allow the VoIP subscriber to select a messaging notification mechanism, whether by email, pager, or some other means. The VoIP subscriber may need to specify additional information, such as the email address, or that information can be retrieved from the VoIP subscriber's profile information.

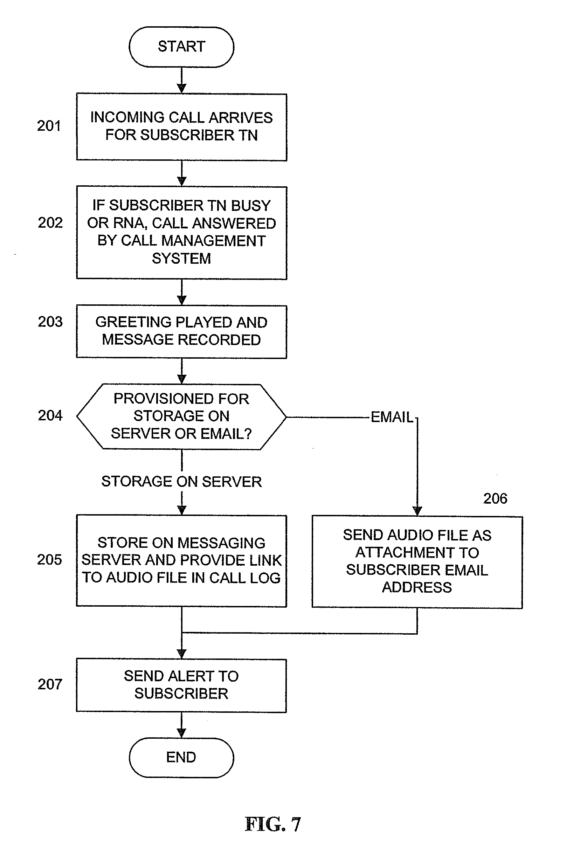

FIG. 7 illustrates the processing performed by the VoIP platform as the VoIP subscriber, who has provisioned the call management service, receives a call, in accordance with a preferred embodiment of this aspect of the invention. At step 201, an incoming call arrives for the Subscriber TN. If the Subscriber Tn is busy or RNA, at step 202, then the call is answered by the messaging service. At step 203, the outgoing message selected by the VoIP subscriber is played for the caller. If the subscriber selected outgoing message is a personalized greeting, but the greeting is not yet recorded, the caller hears the pre-recorded system greeting. The caller then proceeds to leave a message and the system records the message as an audio file. The messaging service may permit the caller to review and/or change the message. The messaging service then determines whether the subscriber had provisioned the messaging service at step 204a and b. If the disposition is "Store on server", the message is stored on the server within some short period of time after the message is recorded. (The VoiceXML gateway can submits the message to the call management server). If the Disposition is "Send as email attachment", the server sends the message to the specified email address as a file attachment (typically in WAV format). The email subject will include the date, timestamp, and Caller ID (if available). If the Disposition is "Both", then both of steps 205 and 206 are performed.

Finally, at step 207, an alert is sent to the VoIP subscriber notifying the subscriber of the missed call and the message. For example, the VoIP subscriber could be send an email alert indicating that the new message has been recorded, independent of whether the message is included as an attachment or not. The email subject can include message header information, such as the date, the time, the Caller ID if available, etc. Where the VoIP telephone has some form of Message Waiting Indicator (MWI) support, the telephone could be made to show the VoIP subscriber that a message has been recorded. When a new message arrives, the VoIP platform sends a SIP NOTIFY message to the application server. The application server then sends a message to the TA to activate the MWI, e.g., wither by activating an MWI lamp or through a stutter dial tone. When the VoIP subscriber picks up the VoIP phone, the subscriber would be able to hear the stutter dial tone followed by a regular dial tone. When messages are in a "new" state and then all messages have been deleted or changed to a "saved" state, the VoIP platform can send a SIP NOTIFY message to the application server. The application server then sends a message to de-activate the MWI. For example, the VoIP subscriber would pick up the VoIP phone and hear a regular dial tone with no stutter dial tone.

The VoIP subscriber can then access and retrieve the messages using either Phone Feature Manager or the Web Portal. By using a web browser to access the VoIP Web Portal, as mentioned above, a variety of additional services are possible and can be integrated with the message list. Moreover, as a separate or integrated service, the list can include entries in the form of a call log for all calls placed and received over a number of days. All of the calls can include information such as:
Date
Timestamp of start of Call
Near-Party TN
Far-Party TN, if available
Name (as pulled from subscriber's service provisioning data)
All of the telephone numbers can be presented as "Click-to-Dial" buttons. The telephone numbers can also have an icon which will use the number to retrieve and display information from a reverse lookup in a telephone directory (or from the user's own personal address directory). Where a message has been recorded, an icon can be presented that permits the subscriber to click and play the audio file. Other options can be presented that permit the subscriber to forward the message to an email address or addresses, save or delete the message.

The foregoing description is to be understood as being in every respect illustrative and exemplary, but not restrictive, and the scope of the invention disclosed herein is not to be determined from the description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope and spirit of the invention. For example, the detailed description describes an embodiment of the invention with particular reference to a VoIP service architecture. However, the principles of the present invention could be readily extended to other network service architectures. Such an extension could be readily implemented by one of ordinary skill in the art given the above disclosure.

## Claims

1. A method for managing calls from at least one calling party to at least one called party, the method comprising:
receiving an incoming call from the calling party designated to arrive at least at one end device of the called party;
retrieving profile information associated with the called party when said called party's end device is busy or does not answer;
processing call information from said calling party based on the profile information or wherein the profile information includes instructions regarding storing the call information, or sending the call information to an address specified by the called party, or combinations thereof.

2. The method of claim 1, wherein the address specified by the called party is selected from the group consisting of electronic mail address, fax address, page address, web address and combinations thereof.

3. The method of claim 2, wherein the address specified by the called party is an electronic mail address, and wherein the call information is sent as an attachment to said electronic mail address.

4. The method of claim 1, further comprising sending a notification to the called party that call information has been received from a calling party.

5. The method of claim 4, wherein the notification is sent in an email or page.

6. The method of claim 1, wherein said call information sent to the called party includes a call log.

7. The method of claim 6, wherein the call log includes at least one of the group consisting of date, time, caller identification and telephone number for each received call.

8. The method of claim 6, further comprising presenting to the called party an interface to an audio file representation of the call information from a calling party.

9. The method of claim 8, wherein the audio file representation is embedded in the call log.

10. The method of claim 6, further comprising presenting to the called party in the call log an interface to a click-to-dial telephone service.

11. The method of claim 6, further comprising presenting to the called party in the call log an interface to a telephone directory service, wherein said service includes additional information about one or more of the calling parties.

12. The method of claim 6, further comprising presenting to the called party in the call log an interface to a personal address book of the called party, wherein said address book includes additional information about one or more of the calling parties.

13. The method of claim 1, further comprising receiving a request from the called party to retrieve the stored call information.

14. The method of claim 1, wherein the profile information further includes services subscribed to by the called party.

15. The method of claim 1, wherein the profile information further includes information on number of rings required prior to receiving the incoming call.

16. The method of claim 1, wherein the profile information further includes a greeting selected by the called party.

17. The method of claim 1, further comprising receiving from the called party a request to query the profile information.

18. The method of claim 1, further comprising receiving from the called party a request to change the profile information.

19. The method of claim 18, further comprising editing the profile information based on the request to change the profile information.

20. A system for managing calls from at least one calling party to at least one called party, the system comprising:
an internet protocol network connected to at least one end device of the called party;
at least one gateway for receiving an incoming call from the calling party designated to arrive at the called party's end device; and
at least one platform connected to the gateway for handling the incoming call received from said gateway when the called party's end device is busy or does not answer, wherein said handling includes:
retrieving profile information associated with the called party; and
processing call information from said calling party based on the profile information, wherein the profile information includes instructions regarding storing the call information, or sending the call information to an address specified by the called party, or combinations thereof.

21. The system of claim 20, wherein said platform includes at least one database for storing the profile information.

22. The system of claim 20, wherein said platform is connected to the internet protocol network for forwarding the call information to the called party's end device and for receiving commands from the called party's end device.

23. The system of claim 20, wherein said platform includes at least one server connected via a high speed local area network using Ethernet switches, routers or a combination thereof to provide access and networking to the internet protocol network.

24. The system of claim 20, wherein the internet protocol network is connected to the called party's end device via a broadband access network provided through a cable or digital subscriber line modem.
